# EUROPÄISCHE PATENTSCHRIFT

(11) **EP 2 094 541 B1**
(45) Veröffentlichungstag und Bekanntmachung des Hinweises auf die Patenterteilung: **06.01.2010**
(21) Anmeldenummer: 07820757.8
(22) Anmeldetag: 01.10.2007
(51) Int. Cl.: B60S 1/16, B60S 1/58, E05B 65/12

(54) **ELEKTROMECHANISCHE ANTRIEBSVORRICHTUNG ZUM EINSATZ IN EINER HECKKLAPPE EINES KRAFTFAHRZEUGS**
ELECTROMECHANICAL DRIVING DEVICE FOR USE IN A TAILGATE OF A MOTOR VEHICLE
DISPOSITIF D'ENTRAÎNEMENT ÉLECTROMAGNÉTIQUE DESTINÉ À ÊTRE UTILISÉ DANS LE HAYON ARRIÈRE D'UN VÉHICULE AUTOMOBILE

(30) Priorität: 21.11.2006 DE 102006054753
(43) Veröffentlichungstag der Anmeldung: 02.09.2009
(73) Patentinhaber: Robert Bosch GmbH, 70442 Stuttgart (DE)
(72) Erfinder: MOECKLIN, Stefan, 77830 Buehl (DE); HUESGES, Mario, 77830 Buehlertal (DE); METZ, Ulrich, 77855 Achern (DE)
(86) Internationale Anmeldenummer: PCT/EP2007/060372
(87) Internationale Veröffentlichungsnummer: WO 2008/061836

(56) Entgegenhaltungen:
- WO-A-99/19181
- US-A- 5 979 256

## Beschreibung

Die vorliegende Erfindung betrifft eine elektromechanische Antriebsvorrichtung zum Einsatz in einer Heckklappe eines Kraftfahrzeugs nach der im Oberbegriff des Anspruchs 1 näher bestimnten Art. Eine solche Antriebsvorrichtung ist aus der WO 99/19181 A1 bekannt.

### Stand der Technik

Aus der europäischen Patentschrift EP 0 937 187 B1 ist eine weitere gattungsgemäße elektromechanische Antriebsvorrichtung bekannt. Die Vorrichtung ist zum Einsatz in einer Heckklappe eines Kraftfahrzeugs bestimmt und umfasst einen Elektromotor zum rotatorischen Antrieb eines im einem Getriebegehäuse aufgenommenen Stirnrades, welches mit einer Getriebeanordnung in Wirkverbindung steht, um eine Abtriebswelle für eine Scheibenwischeinrichtung anzutreiben. Ferner ist die elektromechanische Antriebsvorrichtung mit einer Schließeinrichtung zum Verschließen der Heckklappe mechanisch in Verbindung gebracht, wobei die Vorrichtung selbst als Antriebsvorrichtung für eine Heckscheibenwischervorrichtung ausgebildet ist und der Elektromotor als elektrischer Antrieb zur Betätigung der Wischervorrichtung über eine Getriebeanordnung dient. Zur Betätigung der Schließeinrichtung und zum Antrieb der Wischervorrichtung ist die elektromechanische Antriebsvorrichtung modulartig ausgebildet, wobei der Elektromotor in beiden Drehrichtungen ansteuerbar ist und das Getriebe in der einen Drehrichtung den Kraftübertragungszug zur Wischervorrichtung und in der anderen Drehrichtung den Kraftübertragungszug zur Schließeinrichtung betätigt. Somit kann in Abhängigkeit der Drehrichtung des Elektromotors wahlweise die Wischervorrichtung oder die Schließeinrichtung betätigt werden.

Bei einer derartigen Antriebsvorrichtung ist ein Freilauf erforderlich, so dass bei einer Betätigung der Wischervorrichtung der Kraftübertragungszug zur Schließeinrichtung unterbrochen wird, wobei hingegen der Kraftübertragungszug zur Wischervorrichtung unterbrochen werden muss, wenn die Schließeinrichtung betätigt werden soll. Gemäß der bekannten Ausführungen sind hierfür Mitnehmer im Stirnrad der Antriebsvorrichtung vorgesehen, welche in Wechselwirkung mit einem Betätigungshebel stehen, und die Wechselwirkung-drehrichtungsabhängig einsetzt oder unterbleibt. Der Betätigungshebel muss dabei konstruktiv auf aufwändige Weise über einen Seilzug mit einer Kulisse in Verbindung gebracht werden, welche eine analog zum Türschlüssel der Heckklappe erforderliche Drehung in der Schließeinrichtung hervorruft. Gemäß der Ausführung des Standes der Technik ist ferner ein speziell ausgestaltetes Getriebegehäuse erforderlich, welches den Betätigungshebel sowie den als Bowdenzug ausgebildeten Seilzug aufnimmt, und ferner die Schließeinrichtung mit der Antriebsvorrichtung mechanisch verbindet, um die modulare Bauweise der Antriebsvorrichtung mit der Schließeinrichtung selbst zu schaffen.

Daraus ergibt sich die Aufgabe der vorliegenden Erfindung, eine elektromechanische Antriebsvorrichtung zum Einsatz in einer Heckklappe eines Kraftfahrzeugs zu schaffen, welche zur Erzeugung einer wahlweisen Betätigung einer Scheibenwischeinrichtung oder einer Schließeinrichtung eine einfache Ausführung aufweist und ein Getriebegehäuse umfasst, welches nach bekannter Bauart zum Antrieb einer Scheibenwischereinrichtung ausgeführt ist.

### Offenbarung der Erfindung

Diese Aufgabe wird ausgehend von einer elektromechanischen Antriebsvorrichtung gemäß dem Oberbegriff des Anspruchs 1 in Verbindung mit dessen kennzeichnenden Merkmalen gelöst. Vorteilhafte Weiterbildungen der Erfindung sind in den abhängigen Ansprüchen angegeben.

Die Erfindung schließt die technische Lehre ein, dass sich ein Wellenabschnitt der Stirnradwelle aus dem Getriebegehäuse heraus erstreckt, an welchem Mittel zur Betätigung einer Schließeinrichtung zum Verschließen der Heckklappe und/oder einer Heckklappenscheibe aufgenommen sind.

Die Erfindung geht dabei basierend auf einer Antriebsvorrichtung mit einem in bekannter Art ausgeführten Getriebegehäuse von dem Gedanken aus, zur Vereinfachung lediglich die Stirnradwelle in der Länge zu modifizieren, so dass sich ein Wellenabschnitt aus dem Getriebegehäuse heraus erstreckt, um eine Aufnahmemöglichkeit der Mittel zur Betätigung der Schließeinrichtung zum Verschließen der Heckklappe und/oder einer Heckklappenscheibe zu schaffen. Die Schließeinrichtung kann sowohl zum Verschließen einer Heckklappe, wie sie beispielsweise bei Kombifahrzeugen, Kompaktfahrzeugen oder Kleinwagen bekannt sind, ausgeführt sein, wobei in Abhängigkeit von der Ausführungsform der Heckklappe die Heckklappenscheibe selbst öffenbar bzw. selbst abschließbar ausgeführt sein kann.

Die Stirnradwelle ist verdrehfest mit dem Stirnrad verbunden, so dass sich die Drehbewegung des Stirnrades auf die Stirnradwelle überträgt, und sich der aus dem Getriebegehäuse heraus erstreckende Wellenabschnitt der Stirnradwelle ebenfalls mitdreht.

Gemäß einer vorteilhaften Ausführungsform der Mittel zur Betätigung der Schließeinrichtung umfassen diese eine Freilaufeinrichtung, welche bei einer Drehung der Stirnradwelle in einer ersten Drehrichtung eine Betätigung der Schließeinrichtung und in einer entgegengesetzten zweiten Drehrichtung einen Freilauf der Stirnradwelle bewirkt. In Abhängigkeit der Drehrichtung des Elektromotors kann die Stirnradwelle entweder einen Rechtslauf oder einen Linkslauf ausführen, was durch die erste bzw. entgegengesetzte zweite Drehrichtung beschrieben ist. Die Freilaufeinrichtung ist dabei Teil des Kraftübertragungszuges zwischen der Antriebsvorrichtung und der Schließeinrichtung.

Gemäß einer vorteilhaften Ausführungsform der Freilaufeinrichtung weist diese einen Betätigungshebel auf, welcher mit rotierend auf dem Wellenabschnitt der Stirnradwelle aufgenommen ist und mit einem in Umlaufrichtung des Betätigungshebels keilförmig ausgeführten Schließeinrichtungshebel der Schließeinrichtung in Wirkverbindung steht. Der Betätigungshebel kann auf den Wellenabschnitt aufgepresst oder in sonstiger Weise verdrehfest mit dieser verbunden sein. Rotiert die Stirnradwelle, so rotiert ebenfalls der Betätigungshebel in einer Rotationsebene. In die Rotationsebene erstreckt sich ein Schließeinrichtungshebel aus der Schließeinrichtung heraus, wobei der Schlietieinrichtungshebel keilförmig ausgebildet ist. Rotiert der Betätigungshebel durch die Rotation des Stirnrades, so kann der Betätigungshebel gegen den keilförmigen Schließeinrichtungshebel anlaufen, um den Kraftübertragungszug zwischen der Antriebsvorrichtung und der Schließeinrichtung zu schließen.

Vorteilhafterweise ist der Betätigungshebel in Erstreckungsrichtung der Stirnradwelle elastisch federnd ausgebildet, so dass dieser zur Betätigung der Schließeinrichtung in der ersten Drehrichtung formschlüssig gegen den keilförmigen Schließeinrichtungshebel anläuft und in der zweiten Drehrichtung federnd über den keilförmigen Schtießeinrichtungshebel hinweggleitet, um den Freilauf der Stirnradwelle zu bewirken. Die keilförmige Gestaltung des Schließeinrichtungshebels betrifft einen keilförmigen Querschnitt, wobei die Keilrichtung in der Rotationsebene des Betätigungshebels liegt. Rotiert der Betätigungshebel in der ersten Drehrichtung, so kann dieser wenigstens endseitig gegen die stumpfe Seite des Keilquerschnitts des Schließeinrichtungshebels anlaufen, um die Betätigungskraft auf die Schließeinrichtung formschlüssig zu übertragen. Rotiert der Betätigungshebel in der zweiten Drehrichtung, so gleitet der Betätigungshebel über den Schließeinrichtungshebel hinweg, da dieser auf der anlaufenden Seite des Keilquerschnitts keinen Formschluss mit dem Schließeinrichtungshebel bewirkt. Damit ist eine Freilaufeinrichtung geschaffen, wobei zur sicheren Betätigung der Schließeinrichtung, wenigstens eine Volldrehung des Stirnrades erforderlich ist, um ein Anlaufen des Betätigungshebels gegen die stumpfe Seite des keilförmigen Querschnittprofils des Schließeinrichtungshebels zu gewährleisten. Gemäß einer weiteren vorteilhaften Ausführungsform der Freilaufeinrichtung ist vorgesehen, dass diese in Gestalt eines Hülsenfreilaufes ausgeführt ist, welcher auf dem Wellenabschnitt der Stirnradwelle angeordnet ist und auf dem der Betätigungshebel aufgenommen ist.

Ein Hülsenfreilauf umfasst zwei konzentrisch ineinander gebrachte Hülsenabschnitte, zwischen denen Klemmkörper eingebracht sind, so dass die äußere Hülse gegenüber der inneren Hülse lediglich in eine Drehrichtung verdrehbar ist und in der anderen Verdrehrichtung blockiert. Der Hülsenfreilauf ist mit der inneren Hülse auf dem Wellenabschnitt der Stirnradwelle aufgepresst, wobei der Betätigungshebel mit der äußeren Hülse des Hülsenfreilaufes in Verbindung gebracht ist. Rotiert der Wellenabschnitt der Stirnradwelle in der ersten Drehrichtung, so wird die Drehbewegung von der inneren Hülse auf die äußere Hülse des Hülsenfreilaufes übertragen, und der Betätigungshebel kann mitrotieren. Rotiert hingegen der Wellenabschnitt der Stirnradwelle in der zweiten Drehrichtung, so wird die Drehbewegung von der inneren Hülse des Hülsenfreilaufes nicht auf die äußere Hülse übertragen, und der Betätigungshebel wird nicht in Rotation versetzt.

Vorteilhafterweise ist zwischen dem Betätigungshebel und dem Getriebegehäuse ein Federelement angeordnet, um ein ungewolltes Rückdrehen des Betätigungshebels in der zweiten Drehrichtung zu verhindern. Damit kann eine definierte Lage des Betätigungshebels gewährleistet werden, wobei das Federelement beispielsweise in Form einer kleinen Blattfeder ausgebildet sein kann. Die Blattfeder kann seitlich am Betätigungshebel zur Anlage kommen, so dass der Betätigungshebel nur wenige Winkelgrade vor Eingriff mit dem Schtießeinrichtungshebel positioniert wird.

Eine weitere vorteilhafte Ausführungsform sieht vor, dass zwischen dem Stirnrad und der Getriebeanordnung eine zweite Freilaufeinrichtung angeordnet ist, welche bei einer Drehung des Stirnrades in der ersten Drehrichtung die Bewegungsübertragung auf die Getriebeanordnung unterbricht und in der entgegengesetzten zweiten Drehrichtung die Bewegungsübertragung bewirkt. Die erste Freilaufeinrichtung bewirkt eine drehrichtungsabhängige Unterbrechung des Kraftübertragungszuges in Richtung der Schließeinrichtung, wohingegen die zweite Freilaufeinrichtung eine drehrichtungsabhängige Unterbrechung des Kraftübertragungszuges in Richtung der Getriebeanordnung bewirkt.

Die zweite Freilaufeinrichtung umfasst vorteilhafterweise eine planseitig in das Stirnrad eingebrachte Führungsnut mit einer rampenförmigen Erhebung, wobei in der Führungsnut ein federbelasteter Bolzen geführt ist, welcher mit der Getriebeanordnung in Verbindung steht. Die rampenförmige Erhebung ist durch eine Anlaufseite sowie durch eine Anschlagseite in Umlaufrichtung der Freilaufeinrichtung begrenzt, wobei der Bolzen bei einer Rotation des Stirnrades in der ersten Drehrichtung über die Anlaufseite hinweggleitet und bei einer Rotation in der zweiten Drehrichtung formschlüssig gegen die Anschlagseite anläuft, so dass die Bewegungsübertragung auf die Getriebeanordnung erfolgen kann. Die rampenförmige Erhebung ist bodenseitig in der Führungsnut eingebracht und kann einfach, zweifach oder vielfach auf dem Vollkreis der Führungsnut innerhalb der Planseite des Stirnrades vorgesehen sein. Somit ist die formschlüssige Kraftübertragung über die Anschlagseite nicht erst bei einem maximalen Drehwinkel von 360° erreichbar, sondern bereits bei 180°, bei 120° usw. Der Bolzen ist mittels einer Spiralfeder kraftbeaufschlagt, und drückt gegen die Bodenfläche der Führungsnut. Läuft das Stirnrad in der ersten Drehrichtung, so gleitet der Bolzen über die Bodenseite der Führungsnut hinweg, und gleitet bei Erreichen der Rampe über die schräge Seite der Rampe auf dieser hoch und schnappt bei Erreichen des Endes der Rampe durch die Federkraftbeaufschlagung auf die Bodenfläche der Führungsnut zurück. Eine Übertragung der Drehbewegung des Stirnrades auf die Getriebeanordnung kann somit unterbleiben. Rotiert jedoch das Stirnrad in Richtung der zweiten Drehbewegung, so läuft die Rampe mit der Anschlagseite gegen den Bolzen an, so dass die Übertragung der Drehbewegung auf die Getriebeanordnung möglich ist.

Gemäß einer weiteren Ausführungsform der zweiten Freilaufeinrichtung ist die planseitig in das Stirnrad eingebrachte Führungsnut mit einer Sperrfeder ausgebildet, wobei der in der Führungsnut geführte Bolzen bei einer Rotation des Stirnrades in der ersten Drehrichtung über die Sperrfeder hinweggleitet und bei einer Rotation in der entgegengesetzten zweiten Drehrichtung formschlüssig gegen die Sperrfeder anläuft, so dass die Bewegungsübertragung auf die Getriebeanordnung erfolgen kann. Damit entfällt die rückseitig am Bolzen angeordnete Druckfeder zum Andrücken des Bolzens auf die Führungsbahn, da die Sperrfeder die Nachgiebigkeit bildet, um unter dem Bolzen hinwegzugleiten, und in der zweiten Drehrichtung formschlüssig gegen den Bolzen anzulaufen. Die Sperrfeder kann indes auch als federbelastetes Sperrelement ausgebildet sein, welches schnapperartig aus der Führungsbahn herausragt und bei Überlauf des Bolzens in der Freilaufrichtung durch diesen heruntergedrückt werden kann und in Sperrrichtung eine Anschlagseite bildet, um den Kraftübertragungszug des Stirnrades zur Getriebeanordnung zu schließen.

Wie bereits bei der Ausführungsform der ersten Freilaufeinrichtung beschrieben, besteht in vorteilhafter Weise die Möglichkeit, dass die zweite Freilaufeinrichtung ebenfalls in Gestalt eines Hülsenfreilaufes ausgeführt ist, welcher auf der Stirnradwelle angeordnet ist und auf dem ein Getriebehebel angeordnet ist, welcher mit der Getriebeanordnung in Wirkverbindung steht. Die Stirnradwelle kann nämlich auch in entgegengesetzter Richtung zum Wellenabschnitt einen Verlängerungsabschnitt aufweisen, welcher sich in das Getriebegehäuse hinein erstreckt. Auf diesem Wellenabschnitt kann in wie bereits oben stehend beschriebener Form der Hülsenfreilauf aufgepresst sein, und in bekannter Wirkungsweise in der ersten Drehrichtung den Freilauf bewirken und in der zweiten Drehrichtung die Drehübertragung der inneren Hülse auf die äußere Hülse des Hülscnfreilaufes übertragen und somit die Getriebeanordnung antreiben. Die Getriebeanordnung kann beispielsweise als Umsetzgetriebe ausgeführt sein, wobei auch eine Vier-Gelenk-Getriebeanordnung eine mögliche Ausführungsform darstellt. Bei Getriebeanordnungen der bekannten Ausführungsfonnen umfasst zunächst das Stirnrad einen exzentrischen Getriebebolzen, an dem ein Umsetzhebel gelenkig angeordnet ist. Gemäß der vorliegenden Ausführungsform wird die exzentrische Anordnung des Getriebebolzeiis durch einen Getriebehebel realisiert, welcher gelenkig mit dem Uiiisetzelemeiit verbunden ist. Der Getriebehebel selbst ist durch den Hülsenfreilauf auf der verlängerten Seite der Stirnradwelle an dieser angeordnet.

Um eine modulartige Bauweise der elektromechanischen Antriebsvorrichtung zu schaffen, ist die Schlielieinrichtung am Getriebegehäuse selbst angeordnet. Damit bildet die elektromechanische Antriebsvorrichtung sowohl den Antrieb für die Scheibenwischeinrichtung, als auch für die Betätigung der Verriegelung der Heckklappe bzw. der Heckklappenscheibe, wobei sämtliche Komponenten als eine vormontierbare Einheit ausgeführt werden können. Diese muss zur Montage in der Heckklappe modulartig integriert werden.

Weitere, die Erfindung verbessernde Maßnahmen werden nachstehend gemeinsam mit der Beschreibung eines bevorzugten Ausführungsbeispiels der Erfindung anhand der Figuren näher dargestellt.

### Ausführungsbeispiel

Es zeigt:
- Figur 1: eine quergeschnittene Seitenansicht der elektromechanischen Antriebsvorrichtung, in der die erste Freilaufeinrichtung dargestellt ist;
- Figur 2: eine Draufsicht der elektromechanischen Antriebsvorrichtung mit der ersten Freilaufeinrichtung gemäß der Figur 1;
- Figur 3: eine quergeschnittene Seitenansicht der elektromechanischen Antriebsvorrichtung mit einer weiteren Ausführungsform der ersten Freilaufeinrichtung;
- Figur 4: eine Draufsicht auf die Antriebsvorrichtung mit der ersten Freilaufeinrichtung gemäß der Ausführungsform der Figur 3;
- Figur 5: eine Draufsicht auf die elektromechanische Antriebsvorrichtung, wobei die zweite Freilaufcinrichtung dargestellt ist;
- Figur 6: eine Detailansicht einer möglichen Ausführungsform der zweiten Freilaufeinrichtung gemäß Figur 5;
- Figur 7: eine Detailansicht einer zweiten Ausführungsform der Freilaufeinrichtung gemäß der Figur 5;
- Figur 8: eine dritte Ausführungsform der zweiten Freilaufeinrichtung in einer Draufsicht auf die Antriebsvorrichtung; und
- Figur 9: eine Detailansicht der dritten Ausführungsform der zweiten Freilaufeinrichtung in einer Seitenansicht

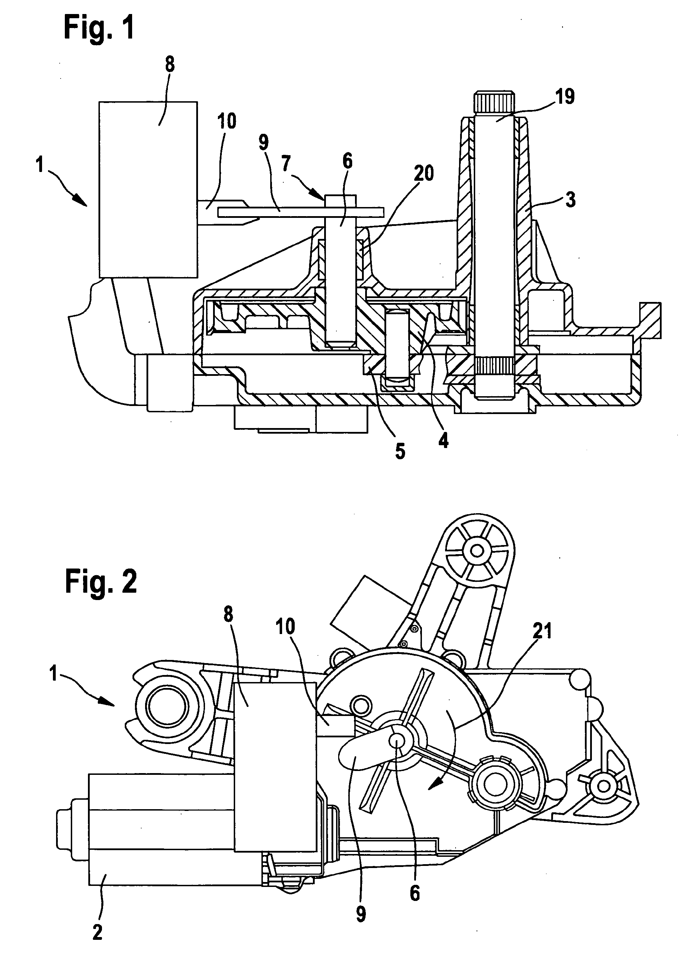

Die Figuren 1 und 2 zeigen eine elektromechanische Antriebsvorrichtung 1, welche ein Getriebegehäuse 3 umfasst, in dem ein Stirnrad 4 drehbar aufgenommen ist, welches mit einer Getriebeanordnung 5 zusammenwirkt. Die Getriebeanordnung 5 ist ebenfalls im Getriebegehäuse 3 aufgenommen und steht mit einer Abtriebswelle 19 in Verbindung. Mittels eines Elektromotors 2 wird das Stirnrad 4 in eine Drehbewegung versetzt, wobei das Stirnrad 4 die Drehbewegung auf die Getriebeanordnung 5 überträgt, und der Kraftübertragungszug auf die Abtriebswelle 19 zur Betätigung einer Scheibenwischeinrichtung gebildet ist. Die Getriebeanordnung 5 ist nur teilweise dargestellt und als Umsetzgetriebe ausgebildet, so dass die Drehbewegung des Stirnrades 4 in eine Pendelbewegung der Abtriebswelle 19 überführt wird.

Das Stirnrad 4 ist auf einer Stirnradwelle 6 aufgenommen, welche mittels einer schematisch dargestellten Sinterbuchse 20 drehbar im Getriebegehäuse 3 aufgenommen ist. Das Getriebegehäuse 3 ist ein Aluminiumdruckguss- oder Kunststoffspritzgussbauteil, und umfasst eine hohlzylinderartige Anformung, in der die Sinterbuchse 20 eingebracht ist. Die Stirnradwelle 6 erstreckt sich mit einem Wellenabschnitt 7 aus der hohlzylinderartigen Anformung des Getriebegehäuses 3 heraus und dient zur Aufnahme eines Betätigungshebels 9. Die Stirnradwelle 6 dreht sich mit der Drehbewegung des Stirnrades 4 mit, wobei der Betätigungshebel 9 ebenfalls verdrehfest mit der Stirnradwelle 6 verbunden ist. In die Rotationsebene des Betätigungshebels 9 erstreckt sich ein Schließeinrichtungshebel 10, welcher an einer Schließeinrichtung 8 angebracht ist. Die Schließeinrichtung 8 ist lediglich schematisch dargestellt und befindet sich auf der Rückseite des Getriebegehäuses 3, wobei die Schließeinrichtung 8 - in nicht näher dargestellter Weise - mechanisch an dem Getriebegehäuse 3 angebracht ist. Der Betätigungshebel 9 ist als flach ausgeführtes Federelement ausgebildet, so dass sich der Betätigungshebel 9 in Erstreckungsrichtung der Stirnradwelle 9 federelastisch verbiegen kann. Der Schließeinrichtungshebel 10 hat einen keilförmigen Querschnitt, welcher in der Darstellung in Figur 1 nicht näher veranschaulicht ist.

Figur 2 zeigt eine Draufsicht der Antriebsvorrichtung 1 gemäß Figur 1. Damit ist der Betätigungshebel 9 aus Blickrichtung der Längserstreckung der Stirnradwelle 6 erkennbar, wobei ein Pfeil 21 dargestellt ist, welcher die Rotation der Stirnradwelle 6 und damit die Rotation des Betätigungshebels 9 andeutet. Trifft der Betätigungshebel 9 in seiner Rotation auf den Schließeinrichtungshebel 10 der Schließeinrichtung 8, so überträgt dieser in Abhängigkeit von der Drehrichtung eine Betätigungskraft auf den Schließeinrichtungshebel 10. Rotiert der Betätigungshebel 9 in Richtung des Pfeils 21, so läuft dieser gegen den keilförmigen Schließeinrichtungshebel 10 an und stößt gegen die Planseite des keilförmigen Hebels. Damit kann eine Kraftübertragung auf den Schließeinrichtungshebel 10 erfolgen, und die Schließeinrichtung 8 wird betätigt. Rotiert jedoch der Betätigungshebel 9 in entgegengesetzter Richtung zum Pfeil 21, so gleitet der Betätigungshebel 9 über den keilförmigen Schließeinrichtungshebel 10 hinweg, und es entsteht ein Freilauf der Stirnradwelle 6. Damit bilden der Betätigungshebel 9 und der Schließeinrichtungshebel 10 mit einer keilförmigen Querschnittsausbildung eine erste Freilaufeinrichtung, welche bewirkt, dass eine Betätigung der Schließeinrichtung 8 nur in einer ersten Drehrichtung (Drehrichtung des Pfeils 21) betätigt wird, wohingegen in der entgegengesetzten zweiten Drehrichtung der Stirnradwelle 6 ein Freilauf geschaffen ist.

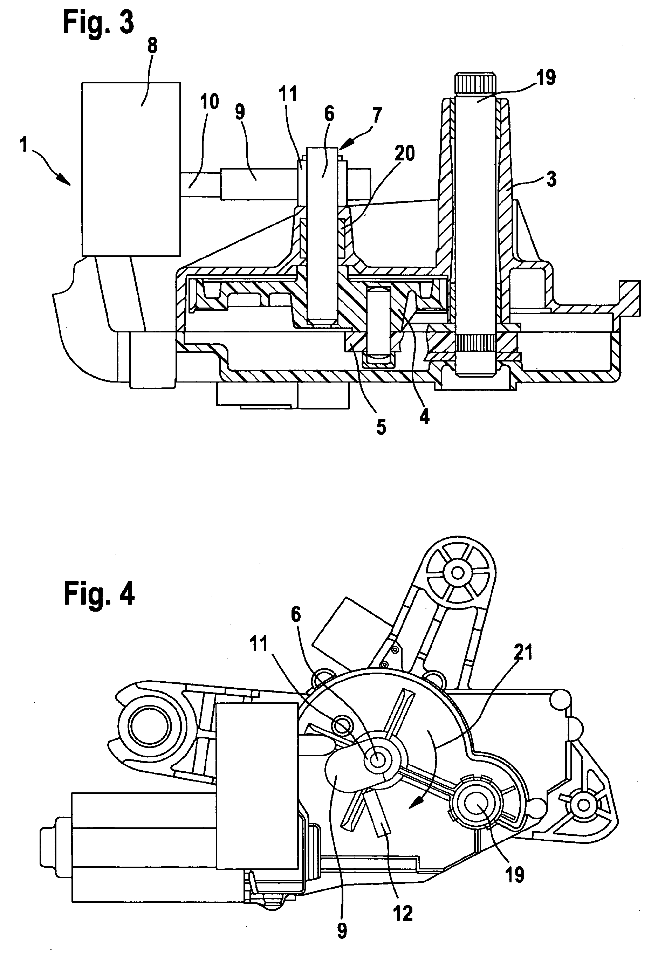

Eine weitere Ausführungsform der ersten Freilaufeinrichtung zwischen der Stirnradwelle 6 und der Schließeinrichtung 8 ist in der quergeschnittenen Seitenansicht der Antriebsvorrichtung 1 gemäß Figur 3 gezeigt. Auch in dieser Ausführungsform ist zunächst ein Betätigungshebel 9 vorgesehen, welcher mit der Rotation der Stirnradwelle 6 mitrotiert und gegen den Schließeinrichtungshebel 10 anlaufen kann. Jedoch ist der Betätigungshebel 9 über einen Hülsenfreilauf 11 auf dem Wellenabschnitt 7 der Stirnradwelle 6 angebracht. Der Hülsenfreilauf 11 ist lediglich schematisch gezeigt und umfasst zwei konzentrisch ineinander gebrachte Zylinderabschnitte, wobei der innere Zylinderabschnitt auf dem Wellenabschnitt 7 aufgepresst ist und der äußere Hülsenabschnitt mit dem Betätigungshebel 9 verdrehfest in Verbindung steht. Die Hülsenabschnitte sind in der ersten Drehrichtung gegeneinander blockiert und in der entgegengesetzten zweiten Drehrichtung kann die innere Hülse in der äußeren Hülse frei rotieren. Damit wird auf gleiche Weise ein erster Freilauf geschaffen, so dass die Stirnradwelle 6 nur in der ersten Drehrichtung eine Rotation des Betätigungshebels 9 bewirkt, und in der entgegengesetzten zweiten Drehrichtung die Abtriebswelle 19 antreibt. In Figur 3 ist ebenfalls die Sinterbuchse 20 erkennbar, welche jedoch nur schematisch dargestellt ist, wobei der Wellenabschnitt 7 der Stirnradwelle 6, welcher sich aus der hohlzylinderförmigen Anformung des Getriebegehäuses 3 heraus erstreckt, der Wahl des ersten Freilaufs in der Länge angepasst ist.

Figur 4 zeigt eine Draufsicht auf die Antriebsvorrichtung 1 gemäß der Ausführungsform der Figur 3, wobei der Hülsenfreilauf 11 ebenfalls in der Draufsicht aus Blickrichtung der Erstreckung der Stirnradwelle 6 gezeigt ist. Zwischen dem Betätigungshebel 9 und dem Getriebegehäuse 3 ist ein Federelement 12 angeordnet, um ein ungewolltes Rückdrehen des Betätigungshebels 9 in der zweiten Drehrichtung zum Antrieb der Abtriebswelle 19 zu verhindern und eine definierte Lage des Hebels zu gewährleisten. Das Federelement 12 kommt dann zum Einsatz, wenn die Drehrichtung der Stirnradwelle 6 entgegen der Drehrichtung erfolgt, die durch den Pfeil 21 in erkennbarer Weise dargestellt ist.

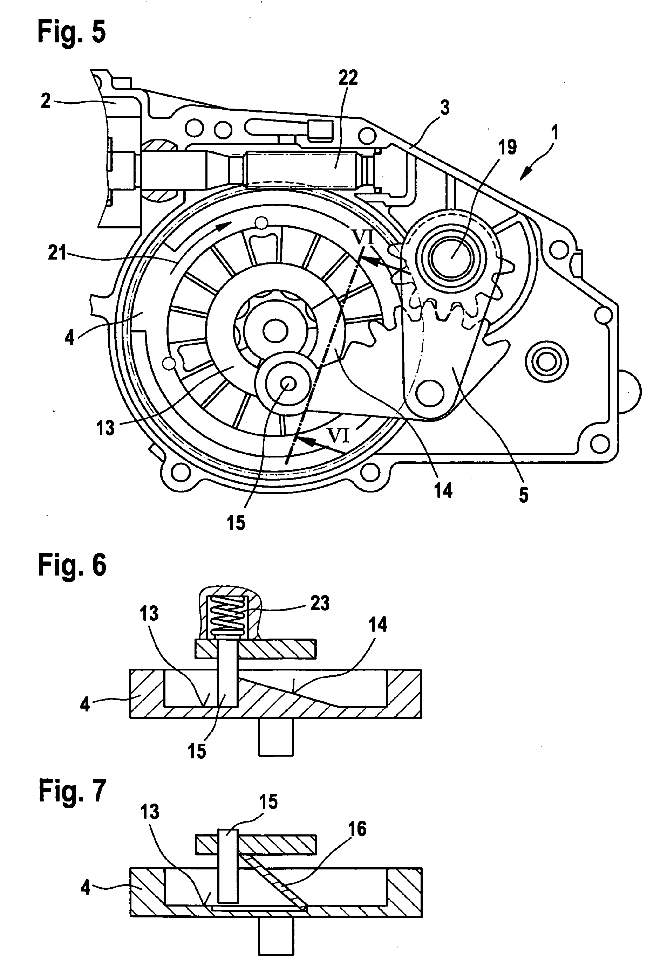

In der Figur 5 ist die elektromechanische Antriebsvorrichtung 1 in einer Draufsicht dargestellt, wobei die Blickrichtung in das innere des Gehäuses 3 führt. Deutlich zu erkennen ist der Elektromotor 2, welcher über eine Schnecke 22 das Stirnrad 4 antreibt. Im Stirnrad 4 ist eine rampenförmige Erhebung 14 planseitig eingebracht, welche sich innerhalb einer Führungsbahn 13 befindet, die umlaufend in die Planseite des Stirnrades 4 eingebracht ist. Die rampenförmige Erhebung 14 weist eine Anlaufseite sowie eine Anschlagseite auf, welche die jeweiligen Begrenzungen der Erhebung 14 in Umlaufrichtung der Führungsbahn 13 bilden. Ein Bolzen 15 läuft in der Führungsbahn 13, welcher mit der Getriebeanordnung 5 mechanisch in Verbindung steht. Wird das Stirnrad 4 in Richtung des Pfeils 21 angetrieben, so läuft der Bolzen 15 planseitig an die Anschlagseite der rampenförmigen Erhebung 14 an. Dadurch wird der Kraftübertragungszug auf die Getriebeanordnung 5 geschlossen, wobei der Bolzen 15 in Umlaufrichtung der Führungsbahn 13 mitläuft. Aufgrund der damit bewirkten Betätigung der Getriebeanordnung 5 kann die Abtriebswelle 19 in eine Pendelbewegung versetzt werden, um die Scheibenwischeinrichtung zu betätigen. Rotiert jedoch das Stirnrad entgegen der dargestellten Richtung des Pfeils 21, so läuft die rampenförmige Erhebung 14 aus Richtung der Anlaufseite gegen den Bolzen 15, so dass der Bolzen 15 auf der rampenförmigen Erhebung 14 aufläuft und ein Formschluss und damit eine Drehmomentübertragung zwischen der Erhebung 14 und dem Bolzen 15 verhindert wird.

Figur 6 zeigt eine Detailansicht der zweiten Freilaufeinrichtung, welche das Stirnrad 4 darstellt, dass in der Schnittebene VI - VI gemäß der Darstellung in Figur 5 geschnitten ist. Damit ist die rampenförmige Erhebung 14 ebenfalls geschnitten dargestellt, wobei gemäß der Darstellung in Figur 6 der Bolzen 15 gegen die Anschlagseite der Erhebung 14 angrenzt, so dass ein Formschluss zwischen der Erhebung 14 und dem Bolzen 15 erfolgt. Der Bolzen 15 ist federbelastet, wobei in dargestellter Form rückseitig eine Druckfeder 23 gegen den Bolzen drückt, um diesen auf die Führungsbahn 13 anzudrücken.

Figur 7 zeigt ein weiteres Ausführungsbeispiel der zweiten Freilaufeinrichtung und stellt ebenfalls das Stirnrad 4 dar. Zur Schaffung einer Sperrrichtung ist eine Sperrfeder 16 zwischen der Führungsbahn 13 im Stirnrad 4 sowie dem Bolzen 15 angeordnet. Wenn sich das Stirnrad 4 in einer ersten Drehrichtung dreht, kann die Sperrfeder 16 gegen den Bolzen 15 anlaufen, so dass die Rotationskraft über die Sperrfeder 16 auf den Bolzen 15 übertragen werden kann. In der entgegengesetzten Richtung schnappt die Sperrfeder 16 unter dem Bolzen 15 hinweg, so dass die Übertragung der Drehbewegung auf den Bolzen 15 unterbleibt.

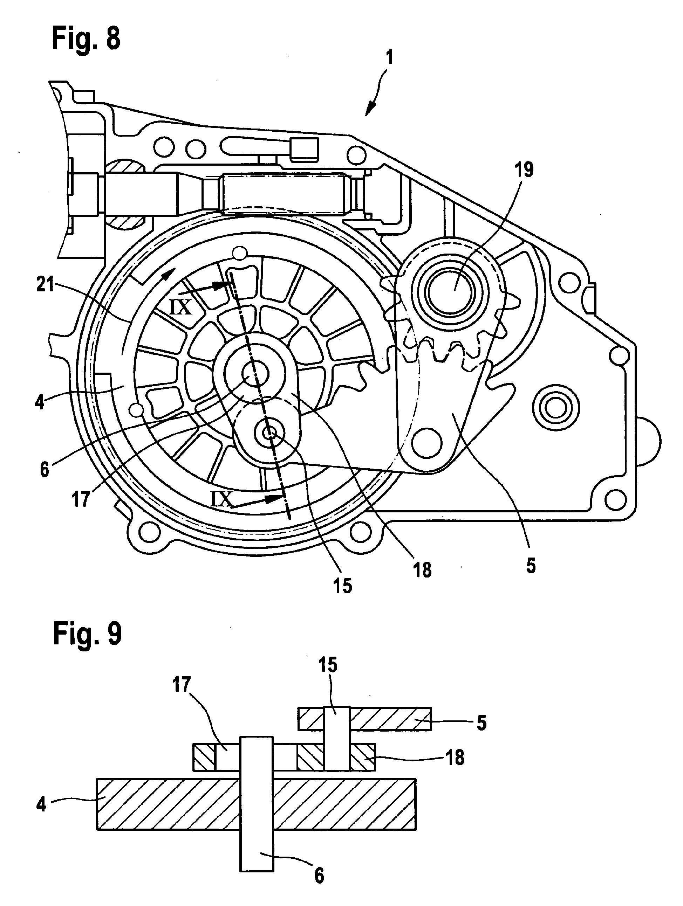

Ein weiteres Ausführungsbeispiel der zweiten Freilaufeinrichtung zeigt die Darstellung der Antriebsvorrichtung 1 in Figur 8 in Verbindung mit Figur 9. Die zweite Freilaufeinrichtung ist in Form eines Hülsenfreilaufes 17 realisiert, welche zwischen der Stirnradwelle 6 und dem Getriebehebel 18 angeordnet ist. Die Verbindung zwischen der Getriebeanordnung 5 und dem Getriebehebel 18 ist durch den Bolzen 15 realisiert, wobei der Hülsenfreilauf 17 die Drehbewegung der Stirnradwelle 6 nur in der zweiten Drehrichtung überträgt. Wird das Stirnrad 4 in Richtung des Pfeils 21 angetrieben, so sperrt der Hülsenfreilauf 17 den Freilauf, und die Drehbewegung der Stirnradwelle 6 wird auf den Getriebehebel 18 übertragen. Durch die Verbindung mittels des Bolzens 15 wird die Getriebeanordnung in Bewegung versetzt, und kann die Abtriebswelle 19 in eine Pendelbewegung überführen.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Die erste Freilaufeinrichtung zwischen der Stirnradwelle 6 bzw. dem Wellenabschnitt 7 und der Schließeinrichtung 8 kann gemäß der vorangegangenen Beschreibung auf zumindest zwei verschiedener Arten ausgeführt sein, wohingegen auch für die zweite Freilaufeinrichtung zwischen dem Stirnrad 4 bzw. der Stirnradwelle 6 und der Getriebeanordnung 5 mehrere Ausführungsbeispiele gezeigt sind. Grundsätzlich ist jede Art der Ausführung der ersten Freilaufeinrichtung kombinierbar mit einer beliebigen Art der Ausführung der zweiten Freilaufeinrichtung.

## Patentansprüche

1. Elektromechanische Antriebsvorrichtung (1) zum Einsatz in einer Heckklappe eines Kraftfahrzeugs mit einem Elektromotor (2) zum rotatorischen Antrieb eines in einem Getriebegehäuse (3) aufgenommenen Stirnrades (4), welches mit einer Getriebeanordnung (5) in Wirkverbindung steht, um eine Abtriebswelle (19) für eine Scheibenwischeinrichtung anzutreiben, wobei das Stirnrad (4) mittels einer mitrotierenden Stirnradwelle (6) im Getriebegehäuse (3) drehbar aufgenommen ist,
**dadurch gekennzeichnet, dass** sich ein Wellenabschnitt (7) der Stirnradwelle (6) aus dem Getriebegehäuse (3) heraus erstreckt, an welchem Mittel zur Betätigung einer Schließeinrichtung (8) zum Verschließen der Heckklappe und/oder einer Heckklappenscheibe aufgenommen sind.

2. Elektromechanische Antriebsvorrichtung (1) nach Anspruch 1,
**dadurch gekennzeichnet, dass** die Mittel zur Betätigung der Schließeinrichtung (8) eine erste Freilaufeinrichtung umfassen, welche bei einer Drehung der Stirnradwelle (6) in einer ersten Drehrichtung eine Betätigung der Schließeinrichtung (8) und in einer entgegengesetzten zweiten Drehrichtung einen Freilauf der Stirnradwelle (6) bewirkt.

3. Elektromechanische Antriebsvorrichtung (1) nach Anspruch 2,
**dadurch gekennzeichnet, dass** die erste Freilaufeinrichtung einen Betätigungshebel (9) aufweist, welcher mitrotierend auf dem Wellenabschnitt (7) der Stirnradwelle (6) aufgenommen ist und mit einem in Umlaufrichtung des Betätigungshebels (9) keilförmig ausgeführten Schließeinrichtungshebel (10) der Schleißeinrichtung (8) in Wirkverbindung steht.

4. Elektromechanische Antriebsvorrichtung (1) nach Anspruch 3,
**dadurch gekennzeichnet, dass** der Betätigungshebel (9) in Erstreckungsrichtung der Stirnradwelle (6) elastisch federnd ausgebildet ist, sodass dieser zur Betätigung der Schließeinrichtung (8) in der ersten Drehrichtung formschlüssig gegen den keilförmigen Schließeinrichtungshebel (10) anläuft und in der zweiten Drehrichtung federnd über den keilförmigen Schließeinrichtungshebel (10) hinweggleitet, um den Freilauf der Stirnradwelle (6) zu bewirken.

5. Elektromechanische Antriebsvorrichtung (1) nach Anspruch 3,
**dadurch gekennzeichnet, dass** die erste Freilaufeinrichtung in Gestalt eines Hülsenfreilaufes (11) ausgeführt ist, welcher auf dem Wellenabschnitt (7) der Stirnradwelle (6) angeordnet ist und auf dem der Betätigungshebel (9) aufgenommen ist.

6. Elektroinechanische Antriebsvorrichtung (1) nach Anspruch 5,
**dadurch gekennzeichnet, dass** zwischen dem Betätigungshebel (9) und dem Getriebegehäuse (3) ein Felderelement (12) angeordnet ist, um ein ungewolltes Rückdrehen des Betätigungshebels (9) in der zweiten Drehrichtung zu verhindern.

7. Elektromechanische Antriebsvorrichtung (1) nach einem der Ansprüche 2 bis 6,
**dadurch gekennzeichnet, dass** zwischen dem Stirnrad (4) und der Getriebeanordnung (5) eine zweite Freilaufeinrichtung angeordnet ist, welche bei einer Drehung des Stirnrades (4) in der ersten Drehrichtung die Bewegungsübertragung auf die Getriebeanordnung (5) unterbricht und in der entgegengesetzten zweiten Drehrichtung die Bewegungsübertragung bewirkt.

8. Elektromechanische Antriebsvorrichtung (1) nach Anspruch 7,
**dadurch gekennzeichnet, dass** die zweite Freilaufeinrichtung eine planseitig in das Stirnrad (4) eingebrachte Führungsnut (13) mit einer rampenförmigen Erhebung (14) umfasst, wobei in der Führungsnut (13) ein federbelasteter Bolzen (15) geführt ist, welcher mit der Getriebeanordnung (5) in Verbindung steht.

9. Elektromechanische Antriebsvorrichtung (1) nach Anspruch 8,
**dadurch gekennzeichnet, dass** die rampenförmige Erhebung (14) durch eine Anlaufseite sowie durch eine Anschlagseite begrenzt ist, und der Bolzen (15) bei einer Rotation des Stirnrades (4) in der ersten Drehrichtung über die Anlaufseite hinweggleitet und bei einer Rotation in der zweiten Drehrichtung formschlüssig gegen die Anschlagseite anläuft, sodass die Bewegungsübertragung auf die Getriebeanordnung erfolgt.

10. Elektromechanische Antriebsvorrichtung (1) nach Anspruch 7,
**dadurch gekennzeichnet, dass** die planseitig in das Stirnrad (4) eingebrachte Führungsnut (13) mit einer Sperrfeder (16) ausgebildet ist, wobei der in der Führungsnut (13) geführte Bolzen (15) bei einer Rotation des Stirnrades (4) in der ersten Drehrichtung über die Sperrfeder (16) hinweggleitet und bei einer Rotation in der entgegengesetzten zweiten Drehrichtung formschlüssig gegen die Sperrfeder (16) anläuft, sodass die Bewegungsübertragung auf die Getriebeanordnung erfolgt.

11. Elektromechanische Antriebsvorrichtung (1) nach Anspruch 7,
**dadurch gekennzeichnet, dass** die zweite Freilaufeinrichtung in Gestalt eines Hülsenfreilaufes (17) ausgeführt ist, welcher auf der Stirnradwelle (6) angeordnet ist und auf dem ein Getriebehebel (18) angeordnet ist, welcher mit der Getriebeanordnung (5) in Wirkverbindung steht.

12. Elektromechanische Antriebsvorrichtung (1) nach einem der vorgenannten Ansprüche,
**dadurch gekennzeichnet, dass** die Schließeinrichtung (8) am Getriebegehäuse (3), vorzugsweise an der Austrittsseite des Wellenabschnittes (7) aus dem Getriebegehäuse (3), angeordnet ist.

## Claims

1. Electromechanical drive apparatus (1) for use in a tailgate of a motor vehicle, having an electric motor (2) for driving in rotation a spur gear (4) which is mounted in a gear mechanism housing (3) and which is operatively connected to a gear mechanism arrangement (5), in order to drive an output shaft (19) for a windscreen wiping device, with the spur gear (4) being rotatably mounted in the gear mechanism housing (3) by means of a co-rotating spur gear shaft (6), **characterized in that** a shaft section (7) of the spur gear shaft (6) extends out of the gear mechanism housing (3) on which means for operating a closing device (8) for closing the tailgate and/or a tailgate windscreen are mounted.

2. Electromechanical drive apparatus (1) according to Claim 1, **characterized in that** the means for operating the closing device (8) comprise a first freewheeling device which causes the closing device (8) to be operated when the spur gear shaft (6) rotates in a first rotation direction, and causes freewheeling of the spur gear shaft (6) in an opposite second rotation direction.

3. Electromechanical drive apparatus (1) according to Claim 2, **characterized in that** the first freewheeling device has an operating lever (9) which is mounted in a co-rotating fashion on the shaft section (7) of the spur gear shaft (6) and is operatively connected to a closing device lever (10) of the closing device (8), which closing device lever is designed in a wedge-shaped manner in the direction of rotation of the operating lever (9).

4. Electromechanical drive apparatus (1) according to Claim 3, **characterized in that** the operating lever (9) is of elastically sprung design in the direction of extent of the spur gear shaft (6), with the result that the said operating lever (9) runs up against the wedge-shaped closing device lever (10) in an interlocking fashion in order to operate the closing device (8) in the first rotation direction, and in the second rotation direction slides away in a sprung fashion over the wedge-shaped closing device lever (10) in order to cause the spur gear shaft (6) to freewheel.

5. Electromechanical drive apparatus (1) according to Claim 3, **characterized in that** the first freewheeling device is designed in the form of a sleeve freewheel (11) which is arranged on the shaft section (7) of the spur gear shaft (6) and on which the operating lever (9) is mounted.

6. Electromechanical drive apparatus (1) according to Claim 5, **characterized in that** a field element (12) is arranged between the operating lever (9) and the gear mechanism housing (3) in order to prevent undesired reverse-rotation of the operating lever (9) in the second rotation direction.

7. Electromechanical drive apparatus (1) according to one of Claims 2 to 6, **characterized in that** a second freewheeling device is arranged between the spur gear (4) and the gear mechanism arrangement (5), which freewheeling device interrupts the transmission of the movement to the gear mechanism arrangement (5) when the spur gear (4) rotates in the first rotation direction, and in the opposite second rotation direction causes the movement to be transmitted.

8. Electromechanical drive apparatus (1) according to Claim 7, **characterized in that** the second freewheeling device comprises a guide groove (13) which is made on the flat face of the spur gear (4) and has a ramp-like raised portion (14), with a spring-loaded bolt (15), which is connected to the gear mechanism arrangement (5), being guided in the guide groove (13).

9. Electromechanical drive apparatus (1) according to Claim 8, **characterized in that** the ramp-like raised portion (14) is bounded by a run-up face and by a stop face, and the bolt (15) slides away over the run-up face when the spur gear (4) rotates in the first rotation direction, and runs up against the stop face in an interlocking fashion when the said spur gear rotates in the second rotation direction, with the result that the movement is transmitted to the gear mechanism arrangement.

10. Electromechanical drive apparatus (1) according to Claim 7, **characterized in that** the guide groove (13) which is made on the flat face of the spur gear (4) is formed with a locking spring (16), with the bolt (15) which is guided in the guide groove (13) sliding away over the locking spring (16) when the spur gear (4) rotates in the first rotation direction, and running up against the locking spring (16) in an interlocking fashion when the said spur gear rotates in the opposite second rotation direction, with the result that the movement is transmitted to the gear mechanism arrangement.

11. Electromechanical drive apparatus (1) according to Claim 7, **characterized in that** the second freewheeling device is designed in the form of a sleeve freewheel (17) which is arranged on the spur gear shaft (6) and on which a gear mechanism lever (18), which is operatively connected to the gear mechanism arrangement (5), is arranged.

12. Electromechanical drive apparatus (1) according to one of the preceding claims, **characterized in that** the closing device (8) is arranged on the gear mechanism housing (3), preferably on the side on which the shaft section (7) exits the gear mechanism housing (3).

## Revendications

1. Dispositif d'entraînement électromécanique (1) pour l'utilisation dans un hayon arrière d'un véhicule automobile, comprenant un moteur électrique (2) pour l'entraînement en rotation d'un pignon (4) reçu dans un boîtier de transmission (3), qui est en liaison fonctionnelle avec un agencement de transmission (5), afin d'entraîner un arbre de sortie (19) pour un dispositif d'essuie-glace, le pignon (4) étant reçu à rotation dans le boîtier de transmission (3) au moyen d'un arbre de pignon (6) tournant en même temps, **caractérisé en ce qu'**une portion d'arbre (7) de l'arbre de pignon (6) fait saillie hors du boîtier de transmission (3), sur lequel sont reçus des moyens pour l'actionnement d'un dispositif de fermeture (8) pour fermer le hayon arrière et/ou une vitre du hayon arrière.

2. Dispositif d'entraînement électromécanique (1) selon la revendication 1, **caractérisé en ce que** les moyens pour l'actionnement du dispositif de fermeture (8) comprennent un premier dispositif de roue libre, qui, dans le cas d'une rotation de l'arbre de pignon (6) dans un premier sens de rotation, provoque un actionnement du dispositif de fermeture (8), et dans un deuxième sens de rotation opposé, provoque une libre rotation de l'arbre de pignon (6).

3. Dispositif d'entraînement électromécanique (1) selon la revendication 2, **caractérisé en ce que** le premier dispositif de roue libre présente un levier d'actionnement (9) qui est reçu de manière à tourner en même temps sur la portion d'arbre (7) de l'arbre de pignon (6), et qui est en liaison fonctionnelle avec un levier de dispositif de fermeture (10) du dispositif de fermeture (8), réalisé en forme de clavette dans la direction périphérique du levier d'actionnement (9).

4. Dispositif d'entraînement électromécanique (1) selon la revendication 3, **caractérisé en ce que** le levier d'actionnement (9) est réalisé sous forme élastique à ressort dans la direction d'étendue de l'arbre de pignon (6), de sorte qu'il s'applique par engagement par coopération de forme contre le levier de dispositif de fermeture (10) en forme de clavette dans le premier sens de rotation pour l'actionnement du dispositif de fermeture (8), et qu'il glisse au-delà du levier de dispositif de fermeture (10) en forme de clavette de manière élastique dans le deuxième sens de rotation, afin de provoquer la libre rotation de l'arbre de pignon (6).

5. Dispositif d'entraînement électromécanique (1) selon la revendication 3, **caractérisé en ce que** le premier dispositif de roue libre est réalisé sous forme d'une roue libre en forme de douille (11) qui est disposée sur la portion d'arbre (7) de l'arbre de pignon (6) et sur laquelle le levier d'actionnement (9) est reçu.

6. Dispositif d'entraînement électromécanique (1) selon la revendication 5, **caractérisé en ce que** l'on dispose entre le levier d'actionnement (9) et le boîtier de transmission (3) un élément de ressort (12) pour éviter un retour en arrière indésirable par rotation du levier d'actionnement (9) dans le deuxième sens de rotation.

7. Dispositif d'entraînement électromécanique (1) selon l'une quelconque des revendications 2 à 6, **caractérisé en ce que** l'on dispose entre le pignon (4) et l'agencement de transmission (5) un deuxième dispositif de roue libre qui, dans le cas d'une rotation du pignon (4) dans le premier sens de rotation, interrompt le transfert du mouvement à l'agencement de transmission (5) et provoque le transfert du mouvement dans le deuxième sens de rotation opposé.

8. Dispositif d'entraînement électromécanique (1) selon la revendication 7, **caractérisé en ce que** le deuxième dispositif de roue libre comprend une rainure de guidage (13) montée du côté plan dans le pignon (4), avec un rehaussement (14) en forme de rampe, un boulon sollicité par ressort (15) étant guidé dans la rainure de guidage (13), lequel est en liaison avec l'agencement de transmission (5).

9. Dispositif d'entraînement électromécanique (1) selon la revendication 8, **caractérisé en ce que** le rehaussement (14) en forme de rampe est limité par un côté de montée ainsi que par un côté de butée, et le boulon (15) glisse, dans le cas d'une rotation du pignon (4) dans le premier sens de rotation, au-delà du côté de montée et dans le cas d'une rotation dans le deuxième sens de rotation, s'applique par engagement par coopération de forme contre le côté de butée, de sorte que le transfert du mouvement à l'agencement de transmission ait lieu.

10. Dispositif d'entraînement électromécanique (1) selon la revendication 7, **caractérisé en ce que** la rainure de guidage (13) montée du côté plan dans le pignon (4) est réalisée avec un ressort de blocage (16), le boulon (15) guidé dans la rainure de guidage (13), dans le cas d'une rotation du pignon (4) dans le premier sens de rotation, glissant au-delà du ressort de blocage (16), et dans le cas d'une rotation dans le deuxième sens de rotation opposé, s'appliquant par engagement par coopération de forme contre le ressort de blocage (16), de sorte que le transfert du mouvement à l'agencement de transmission ait lieu.

11. Dispositif d'entraînement électromécanique (1) selon la revendication 7, **caractérisé en ce que** le deuxième dispositif de roue libre est réalisé sous forme d'une roue libre en forme de douille (17) qui est disposée sur l'arbre de pignon (6) et sur laquelle est disposé un levier de transmission (18), qui est en liaison coopérante avec l'agencement de transmission (5).

12. Dispositif d'entraînement électromécanique (1) selon l'une quelconque des revendications précédentes, **caractérisé en ce que** le dispositif de fermeture (8) est disposé sur le boîtier de transmission (3), de préférence du côté de la sortie de la portion d'arbre (7) hors du boîtier de transmission (3).
